# EUROPEAN PATENT APPLICATION

(11) **EP 4 498 112 A1**
(43) Date of publication of application: **29.01.2025**
(21) Application number: 23187859.6
(22) Date of filing: 26.07.2023
(51) Int. Cl.: G01S 7/02, G01S 7/28, G01S 13/18, G01S 13/34, G01S 13/931

(54) **WINDOWING IN A RADAR TRANCEIVER**

(71) Applicant: Magna Electronics Sweden AB, 447 37 Vårgårda (SE)
(72) Inventor: STARK, Philipp, Niederwerrn (DE); KRITZNER, Michael, Niederwerrn (DE)
(74) Representative: Westpatent AB

(57) **Abstract**

A radar transceiver (101) comprising a control unit (102), a transmitter unit (103) and a receiver unit (104). The transmitter unit (103) is adapted to generate and transmit a plurality of subsequent radar waveforms (108) via a transmitter unit antenna arrangement (105) comprised in the transmitter unit (103). The transmitter unit (103) further comprises a controllable amplifier arrangement (113), where the control unit (102) is adapted to control the amplifier arrangement (113) to apply at least one Tx window function (301, 501) to a plurality of the generated radar waveforms (108, r₁-r₈). This is accomplished by controlling the amplifier arrangement (113) to reduce output power according to predetermined characteristics of the Tx window function (301, 501).

## Description

The present disclosure relates to radar transceivers and in particular to techniques for windowing. The radar transceivers discussed herein are suitable for vehicle radar systems.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

Well-known types of radar transmission formats are the frequency modulated continuous wave (FMCW), Chirp sequence (CS) and Stepped frequency continuous wave (SFCW) format. Many types of radar waveforms comprise a 'chirp' signal of linearly increasing or decreasing frequency. Typically, such a radar transceiver transmits multiple consecutive chirps in a saw-tooth like pattern, where the down-mixed return signal from a target will be processed with a two-dimensional (2D) fast Fourier transform (FFT) to create a matrix of complex amplitudes where each matrix element corresponds to a given range and relative target speed, or Doppler frequency shift.

By identifying local maxima in this matrix, exceeding a predefined threshold, detections can be extracted from this matrix, each with an associated range and speed. This is normally referred to as the detection phase and is then followed by the angle of arrival estimation phase, where the phases of the receiver antennas are processed. An FMCW radar transceiver normally operates in cycles, where each cycle comprises a detection phase.

The benefits of using FMCW radar waveforms are well-known for automotive radar systems. An FMCW-based radar transceiver can support wide band performance, such as 1GHz sweeps, to deliver the capability to resolve two targets that are only on the order of 20cm in radial separation in a cost-efficient manner. The 77GHz radar band provides a worldwide 1GHz bandwidth allocation for such radar systems, which is an advantage when it comes to production volumes. FMCW radar transceivers also normally produce highly constrained frequency spectra, allowing efficient use of the available bandwidth, which is a further advantage.

To reduce the side lobe level of signals, state of the art CS (chirp sequence) or FMCW radars use windowed FFT in range and Doppler dimension. Windowing means that an amplitude weighting is applied to the received samples of one ramp for the range FFT and to the ramps for the Doppler FFT. The amplitudes of the samples/ramps are damped according to the window coefficients. Usually the first and last samples/ramps in a block or group of ramps have lower coefficients than more central samples/ramps. This results in better resolution after the FFT since it lowers sidelobes, but can result in negative effects for the further processing of the data.

Those windows, for example Hanning, Hamming, etc., reduce the side lobe level but attenuate the input data, especially at the start and the end of the input data.

Typically, the windows are applied before the Range FFT, Doppler FFT, Azimuth, and Elevation FFTs are performed. Some windows have at least one coefficient that is zero, one commonly known example is the periodic Hanning window.

It is therefore desired to reduce the side lobe level in a more efficient manner.

It is an object of the present disclosure to provide a radar transceiver where the side lobe levels are reduced in a more efficient manner.

This object is achieved by means of a radar transceiver comprising a control unit, a transmitter unit and a receiver unit. The transmitter unit is adapted to generate and transmit a plurality of subsequent radar waveforms via a transmitter unit antenna arrangement comprised in the transmitter unit. The transmitter unit further comprises a controllable amplifier arrangement where the control unit is adapted to control the amplifier arrangement to apply at least one Tx window function to a plurality of the generated radar waveforms. This is achieved by controlling the amplifier arrangement to reduce output power according to predetermined characteristics of the Tx window function.

This means that a Tx window function is applied before the radar waveforms are transmitted, being applied in the transmitter path, the Tx window function being implemented by means of the amplifier arrangement that is controlled by the control unit.

The present disclosure brings many benefits, for example the energy in the transmitted radar waveform can be reduced which also reduces power consumption and allows a higher link budget with same radiated average power. Furthermore, in case of interference by other FMCW radars, the interference impact is less for the other FMCW radars compared to a non-windowed transmitted radar waveform, and especially weaker interference is easier to detect and repair while ramps with lower transmitted power on the ego radar transceiver. In case of a sequence of blocks or groups of radar waveforms, the time between the blocks can be reduced which improves the mismatch between coarse and fine Doppler domain.

According to some aspects, a Tx window function is applied individually to certain radar waveforms. According to some further aspects, a Tx window function is applied to a plurality of radar waveforms. This means that the present disclosure is applicable for different types of windowing.

According to some aspects, at least a first waveform or a last waveform in the plurality of radar waveforms is omitted as a result of the applied Tx window function having corresponding coefficients that equal zero.

This means that power consumption of the transmitter unit and the receiver unit, as well as memory processing dependency and processing resources, can be reduced.

According to some aspects, the receiver unit comprises a digital signal processing, DSP, unit and a receiver unit antenna arrangement. The receiver unit is adapted to receive radar signals that have been reflected by an object via the receiver unit antenna arrangement. The receiver unit is further adapted to provide received digital intermediate frequency, IF, signals that are fed into the DSP unit, where the DSP unit is adapted to apply at least one Rx window function.

According to some aspects, at least one Rx window function constitutes a difference between a Tx window function and a desired combined window function.

In this manner, a desired shape of the combined Rx and Tx window can be accomplished although the Tx window function that is realized at the transmitter unit does not have an ideal shape due to limitations of state-of-the-art hardware. The meaning is that the combined Rx and Tx window shall be equal to an ideal, desired, Tx window function. Coarse/non perfect Tx gain settings thus require a complementary coefficient set at the receiver unit.

By means of the present disclosure, the former used FFT window function at the receiver unit is obsolete and can be disabled and instead adapted to the remaining correction of the Tx window function in case the transmitted power adjustability is too coarse as described above.

According to some aspects, the DSP unit is adapted to apply a first Rx window function before applying a range Fast Fourier Transform, FFT, and to apply a second Rx window function before applying a Doppler FFT.

The second Rx window function applied prior to the Doppler FFT means that every ramp has a different weight according to the window coefficient.

According to some aspects, the radar waveforms are constituted by Frequency Modulated Continuous Wave, FMCW, ramps, Stepped Frequency Continuous Wave, SFCW, ramps, or Orthogonal Frequency-Division Multiplexing, OFDM, symbols. The present disclosure is thus applicable for a multitude of radar waveforms.

There are also disclosed herein methods and vehicles associated with the above-mentioned advantages.

### BRIEF DESCRIPTION OF THE DRAWINGS

The present disclosure will now be described more in detail with reference to the appended drawings, where:
- Figure 1: shows a schematic top view of a vehicle;
- Figure 2: schematically shows some components of a radar transceiver according to the present disclosure;
- Figure 3: schematically shows an example FMCW waveforms and a Tx window function;
- Figure 4: schematically shows an example Tx window function, Rx window function and combined window function;
- Figure 5: schematically shows example FMCW waveforms and a Tx window function;
- Figure 6: schematically shows example SFCW waveforms and a Tx window function;
- Figure 7: schematically shows example OFDM symbols and a Tx window function;
- Figure 8: shows an example control unit;
- Figure 9: shows an example computer program product; and
- Figure 10: is a flow chart illustrating methods.

### DETAILED DESCRIPTION

The inventive concept will now be described more fully hereinafter with reference to the accompanying drawings, in which certain embodiments of the inventive concept are shown.

This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art.

Like numbers refer to like elements throughout the description. Any step or feature illustrated by dashed lines should be regarded as optional.

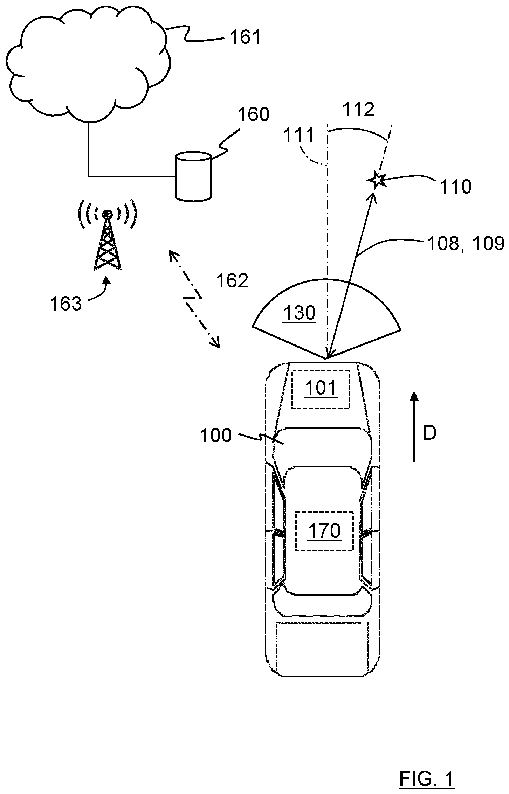

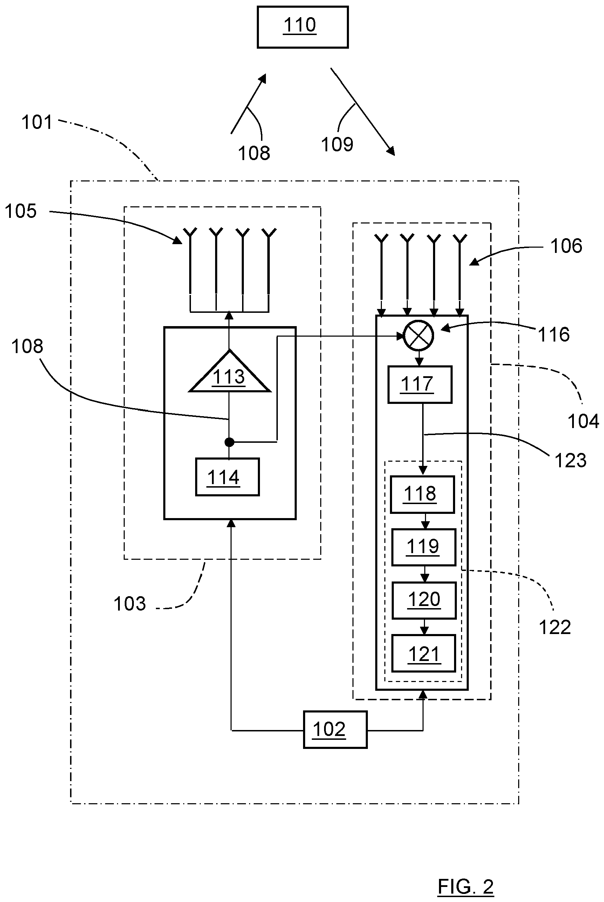

Figure 1 shows a vehicle 100 equipped with a vehicle radar transceiver 101. With reference also to Figure 2, the transceiver 101 comprises a control unit 102, a transmitter unit 103 and a receiver unit 104, where the transmitter unit 103 is adapted to generate and transmit a plurality of subsequent radar waveforms 108 via a transmitter unit antenna arrangement 105 comprised in the transmitter unit 103. The transmitter unit 103 further comprises a controllable amplifier arrangement 113. According to some aspects, the transmitter unit 103 further comprises a signal generator 114 that is adapted to generate the radar waveforms 108 that are adapted to be fed into the controllable amplifier arrangement 113. The initially generated waveforms 108 are thus at least fed through the amplifier arrangement 113 and radiated by means of the transmitter unit antenna arrangement 105.

According to some aspects, the receiver unit 104 comprises a digital signal processing, DSP, unit 122 and a receiver unit antenna arrangement 106, where the receiver unit 104 is adapted to receive radar signals 109 that have been reflected by an object 110 via the receiver unit antenna arrangement 106.

According to some aspects, the receiver unit 104 comprises a mixer unit 116 and an ADC (analogue to digital converter) unit 117 that is adapted to sample and perform analogue to digital conversion of the output from the mixer unit 116. The mixer unit 116 is adapted to mix the received radar signals 109 with the generate radar waveforms 115 outputted from the signal generator 114 such that a down-mixed return signal that has been reflected by a target object 110 is obtained in a previously well-known manner.

In a previously well-known manner, the radar transceiver 101, that can be regarded as a radar transceiver arrangement that is comprised in a radar system, is normally associated with an effective field of view 130 and by means of signal processing where digital samples are determined for received radar signals 109, range and target angle 112 relative a reference line 111, to detected objects 110 can be determined. The obtained information regarding targets 110 is for example used in vehicle systems 170 that relate to safety and assisted driving. Other applications are of course conceivable.

The radar transceiver 101 may according to some aspects be connected via wireless link 162 to a remote server 160, which in turn may be comprised in a cloud-based resource 161 or remote network. This server 160 and network may be configured to assist the control unit 102 in performing various operations such as radar signal processing, interference mitigation, beamforming, and the like. Some parts of the functionality of the transceiver arrangement 100 may thus be comprised in a remote server 160 or cloud-based resource 161.

For this reason, the control unit 102 may be arranged to communicate 162 with a cellular communication system 163. This communication system 163 may, e.g., be a third generation partnership program (3GPP) defined access network like the fourth generation (4G) or the fifth generation (5G) access networks. The access network may provide access to remote networks and other resources such as, e.g., the Internet 161.

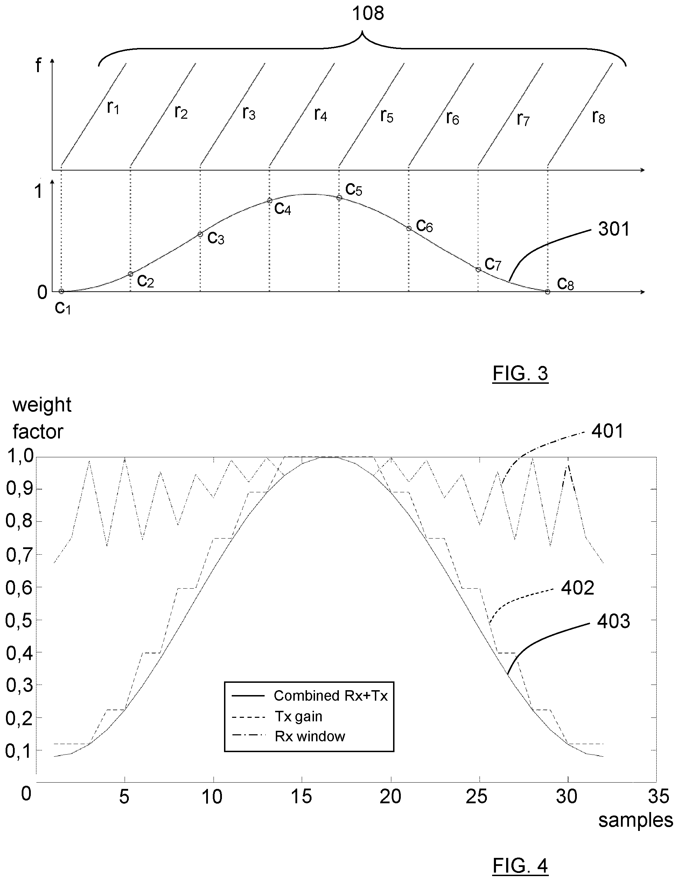

According to the present disclosure, with reference also to Figure 3, Figure 4 and Figure 5, the control unit 102 is adapted to control the amplifier arrangement 113 to apply at least one Tx window function 301, 501 to a plurality of the generated radar waveforms 108, r₁-r₈ by controlling the amplifier arrangement 113 to reduce output power according to predetermined characteristics of the Tx window function 301, 501.

This means that a Tx window function is applied before the radar waveforms are transmitted, being applied in the transmitter path. In this way, state of the art hardware can be used. The Tx window function is thus implemented by means of the amplifier arrangement 113 that is controlled by the control unit 102.

The least complicated application is to apply only the zero weighting to the transmitter path, which constitutes an example of how a Tx window function could be configured. By means of the present disclosure, the efficiency is improved and average radiated power is reduced which is beneficial when following current and future automotive radar regulations, for example regulations on radiated energy, requirements for reduced power consumption and the precept of resource efficiency.

Dependent on the index of the ramp, the transmitted output power is set corresponding to the window coefficients used for the FFT (Fast Fourier Transform) along ramps, the Doppler FFT.

The present disclosure brings many benefits, for example the energy in the transmitted radar waveform 108 can be reduced which also reduces power consumption and allows a higher link budget with same radiated average power. Furthermore, in case of interference by other FMCW radars, the interference impact is less for the other FMCW radars compared to a non-windowed transmitted radar waveform, and especially weaker interference is easier to detect and repair while ramps with lower transmitted power on the ego radar transceiver 101. In case of a sequence of blocks or groups of FMCW ramps, the time between the blocks can be reduced which improves the mismatch between coarse and fine Doppler domain.

At the receiver unit 104, the former used FFT window function is obsolete and could be disabled or might be adapted to the remaining correction of the Tx window function in case the transmitted power adjustability is too coarse as will be described in the following. Known phase shift due to different output-power can be easily mitigated by applying phase rotation which can be done by hardware or software in the signal processing

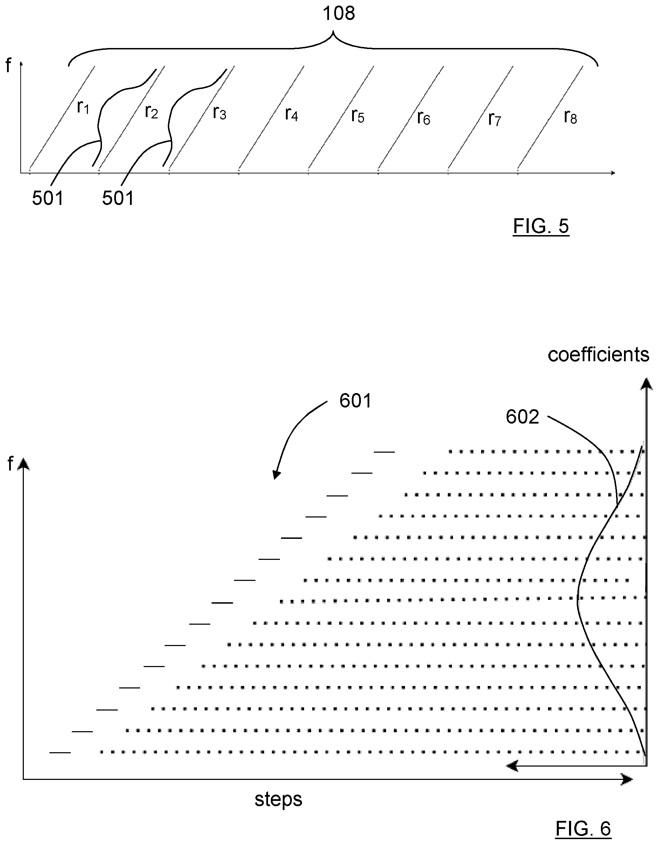

According to some aspects, as illustrated in Figure 5, a Tx window function 501 is applied individually to certain radar waveforms r₁-r₈, in this example FMCW ramps. This means that, as illustrated in this example, there is a corresponding Tx window function 501 applied to each FMCW ramp r₁-r₈. Dependent on the radar waveform used and performance, the window function 501 is thus applied within one ramp r₁-r₈.

According to some aspects, as illustrated in Figure 3, a Tx window function 301 is applied to a plurality of radar waveforms 108, r₁-r₈. The window function 301 comprises a plurality of window coefficients c₁-c₈.

This means that, as illustrated in this example, there is one corresponding Tx window function 301 applied to a plurality of FMCW ramps r₁-r₈.

The present disclosure is evidently applicable for different types of windowing.

According to some aspects, at least a first waveform r₁ or a last waveform r₈ in the plurality of radar waveforms 108, r₁-r₈ is omitted as a result of the applied Tx window function 301 having corresponding coefficients c₁, c₈ that equal zero. In the example shown in Figure 3, a first FMCW ramp r₁ and a last FMCW ramp r₈ in a certain defined plurality of ramps are omitted, the corresponding coefficients c₁, c₈ being zero. The plurality of ramps r can for example relate to a pulse of ramps or to the ramps in one radar cycle.

If a periodic window function is applied in the Doppler domain, it makes one ramp unnecessary of being transmitted since one coefficient of the window function is always 0. In this case, besides reducing power consumption of the transmitter unit 103 and the receiver unit 104, memory processing dependency and processing resources can also be reduced.

According to some aspects, the receiver unit 104 is adapted to provide received digital intermediate frequency, IF, signals 123, that are fed into the DSP unit 122, where the DSP unit 122 is adapted to apply at least one Rx window function 118, 120; 401. The IF signals 123 are suitably outputted from the ADC unit 117.

According to some aspects, as illustrated in Figure 2, the DSP unit 122 is adapted to apply a first Rx window function 118 before applying a Range Fast Fourier Transform, FFT, 119, and to apply a second Rx window function 120 before applying a Doppler FFT 121. The second Rx window function 120 applied prior to the Doppler FFT 121 means that every ramp has a different weight according to the window coefficient.

According to some aspects, at least one Rx window function 118, 120; 401 constitutes a difference between a Tx window function 301 and a desired combined window function 403. This is illustrated in Figure 4 where the Tx gain 402 that corresponds to a Tx window is combined with the Rx window function 401 to for the combined Rx and Tx window 403.

In this manner, a desired shape of the combined Rx and Tx window 403 can be accomplished although the Tx window function that is realized at the transmitter unit 103 does not have an ideal shape due to limitations of state-of-the-art hardware, e.g., granularity of the overall transmitter path gain settings and the limited number of applicable TX power steps for one waveform. The combined Rx and Tx window 403 shall be equal to an ideal Tx window function.

Coarse/non perfect Tx gain settings thus require a complementary coefficient set at the receiver unit 104.

Assuming a perfect world without phase coding, acceleration and one constant moving target, received samples of one FMCW ramp, or other suitable radar waveform, contain the phase information of range and Doppler.

The samples with the same sample index over different FMCW ramps would contain only the Doppler information, i.e., a phase shift by minimal range change per observation step, or ramp, which means velocity and no phase shift due to a constant frequency.

The impact of range on the phase is a phase shift from ADC sample to ADC sample at the ADC unit 117 caused by the modulo of range/wavelength which changes due to the frequency modulation. The constant phase change from ADC sample to ADC sample is a frequency which is visible after the Range FFT 119. The Doppler incurs an additional phase shift, and those phase changes between samples/ramps due to range/velocity are the frequencies in the Range/Doppler domain. This means that the Range/Doppler domain corresponds to the time/frequency domain.

According to some aspects, this means that changing the Tx gain prior to the start of every FMCW ramp according to the coefficients of the Tx window is equivalent to applying a window on the Rx side in the Doppler domain prior to the Doppler FFT, e.g if there are 64 FMCW ramps with 128 range bins after the Range FFT, then there are 128 Doppler FFTs (inclusive windowing with 64 coefficients) performed in the next step. The Doppler FFT of one range bin is then performed over the 64 samples, one sample of each FMCW ramp with the same range bin. The window applied prior to the Doppler FFT means that every one of the 64 FMCW ramps has a different weight according to the window coefficient.

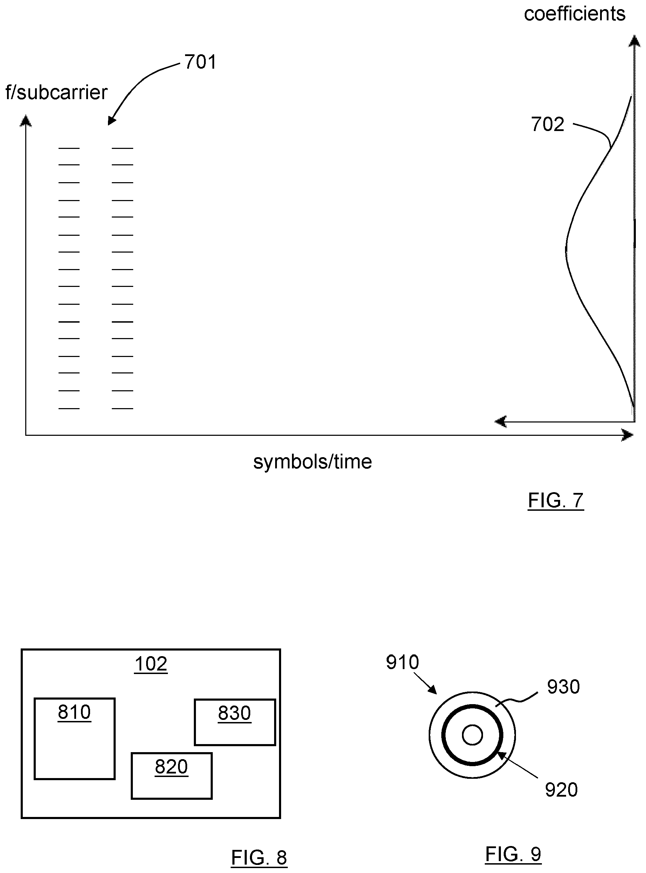

The present disclosure is not limited to FMCW radar waveforms. Rather, the general concepts and techniques disclosed herein can be adapted and applied to many different radar waveforms. For example, the radar waveforms 108 can be constituted by Frequency Modulated Continuous Wave, FMCW, ramps r₁-r₈. Stepped Frequency Continuous Wave, SFCW, ramps 601 there is a corresponding Tx window function 602 as illustrated in Figure 6, Chirp Sequence, CS, or Orthogonal Frequency-Division Multiplexing, OFDM, symbols 701 there is a corresponding Tx window function 702 as illustrated in Figure 7.

The present disclosure is thus applicable for a multitude of radar waveforms.

According to some aspects of the present disclosure, a window function is applied at the transmitter unit 103 instead of only at the receiver unit 104. One or more complimentary Rx window functions 118, 120 may be applied at the receiver unit 104. According to some aspects, as described above, the Tx window function may comprise at least one coefficient equal to zero; in the Range domain this saves Tx-on-time in a ramp for CS/FMCW, and subcarriers in case of OFDM. Applied in the Doppler domain this saves a complete ramp for CS/FMCW or a symbol in the case of OFDM.

For OFDM, Tx window coefficients can be applied in the Range domain/subcarriers of one symbol by applying the window before the IFFT (inverse FFT).

In the following section, examples of application possibilities for Tx window functions are described for common FMCW/CS/SFCW waveforms. This is done for readability and by way of example only. The methods described herein can also be applied on digital waveforms like OFDM.

For a first example, at the ADC unit 117, usually one ramp is sampled and fed into the range processing step at the DSP unit 122. The first Rx window function 118 before the Range FFT 119 can be applied on the transmitter side while sending one ramp.

In case of applying zeroed coefficients, this reduces the number of samples by the associated zeroed samples, resulting in a reduced sampling time which correlates to a reduced transmitting time. Applying all coefficients means a changing Tx power according to the window coefficients within one ramp.

For a second example, the window coefficients that usually are applied before the Doppler FFT 121 can be applied on the corresponding ramps at the transmitter unit 103 while transmitting a block or group of ramps.

In case of only applying the zeroed coefficients, this reduces the number of ramps by the associated zeroed ramps. The reduced number of transmitted ramps benefits in a lower duty cycle, less radiated energy and the option to reduce the duration between consecutive blocks or groups of ramps. This allows an overlapping of the zeroed ramps and the transmitted ramps of the consecutive block without interference.

For a second example, using virtual antenna arrays is a state-of-the-art method to maintain sufficient angular resolution. This is done by combining Tx and Rx channels and a certain antenna arrangement. The present disclosure can be applied at the transmitter unit 103 in case the transmitter antennas in the generated virtual antenna array are separated.

These examples can be combined.

Furthermore, in case of a periodic window function, one ADC sample less can be sampled every ramp. This has only marginal improvement on ramp duration and negligible improvement on processing.

Figure 8 schematically illustrates, in terms of a number of functional units, the components of the control unit 102 according to an embodiment. Processing circuitry 810 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 830. The processing circuitry 810 may further be provided as at least one application specific integrated circuit (ASIC), or field programmable gate array (FPGA).

Particularly, the processing circuitry 810 is configured to cause the control unit 102 to perform a set of operations, or steps. These operations, or steps, were discussed above in connection to the various radar transceivers and methods. For example, the storage medium 830 may store the set of operations, and the processing circuitry 810 may be configured to retrieve the set of operations from the storage medium 830 to cause the control unit 102 to perform the set of operations. The set of operations may be provided as a set of executable instructions. Thus, the processing circuitry 810 is thereby arranged to execute methods and operations as herein disclosed.

The storage medium 830 may also comprise persistent storage, which, for example, can be any single one or combination of magnetic memory, optical memory, solid state memory or even remotely mounted memory.

The control unit 102 may further comprise a communications interface 820 for communications with at least one other unit. As such, the radar interface 820 may comprise one or more transmitters and receivers, comprising analogue and digital components and a suitable number of ports for wired or wireless communication.

The processing circuitry 810 is adapted to control the general operation of the control unit 102 e.g. by sending data and control signals to the external unit and the storage medium 830, by receiving data and reports from the external unit, and by retrieving data and instructions from the storage medium 830.

Other components, as well as the related functionality, of the control unit 102 are omitted in order not to obscure the concepts presented herein.

Figure 9 shows a computer program product 910 comprising computer executable instructions 920 arranged on a computer readable medium 930 to execute any of the methods disclosed herein.

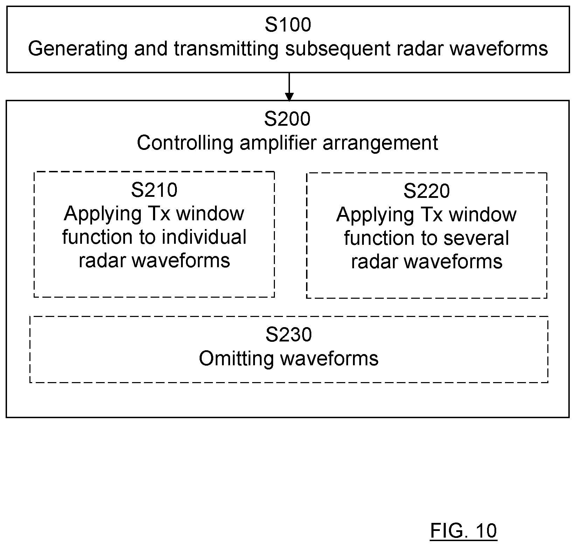

With reference to Figure 10, the present disclosure also relates to a method in a radar transceiver 101. The method comprises generating and transmitting S100 a plurality of subsequent radar waveforms 108 via a controllable amplifier arrangement 113 and a transmitter unit antenna arrangement 105 comprised in a transmitter unit 103. The method further comprises controlling S200 the amplifier arrangement 113 to apply at least one Tx window function 301, 501 to a plurality of the generated radar waveforms 108, r₁-r₈ by controlling the amplifier arrangement 113 to reduce output power according to predetermined characteristics of the Tx window function 301, 501.

According to some aspects, the method further comprises applying S210 a Tx window function 501 individually to certain radar waveforms r₁-r₈.

According to some aspects, the method further comprises applying S220 a Tx window function 301 to a plurality of radar waveforms 108, r₁-r₈.

According to some aspects, the method further comprises applying omitting S230 at least a first waveform r₁ or a last waveform r₈ in the plurality of radar waveforms 108, r₁-r₈ as a result of the applied Tx window function 301 having corresponding coefficients c₁, c₈ that equal zero.

According to some aspects, the method further comprises applying at least one Rx window function 118, 120; 401 at a receiver unit comprised in the radar transceiver 101, where at least one Rx window function 118, 120; 401 constitutes a difference between a Tx window function 301 and a desired combined window function 403.

The present disclosure also relates to a vehicle 100 comprising the radar transceiver 101 as described herein.

The present disclosure is not limited to the examples described above, but may vary freely within the scope of the appended claims. For example, the radar transceiver 101 as described herein may be used for many different applications such as airplanes, trains, ships etc.

## Claims

1. A radar transceiver (101) comprising a control unit (102), a transmitter unit (103) and a receiver unit (104), where the transmitter unit (103) is adapted to generate and transmit a plurality of subsequent radar waveforms (108) via a transmitter unit antenna arrangement (105) comprised in the transmitter unit (103), where the transmitter unit (103) further comprises a controllable amplifier arrangement (113), **characterized in that** the control unit (102) is adapted to control the amplifier arrangement (113) to apply at least one Tx window function (301, 501) to a plurality of the generated radar waveforms (108, r₈-r₈) by controlling the amplifier arrangement (113) to reduce output power according to predetermined characteristics of the Tx window function (301, 501).

2. The radar transceiver (101) according to claim 1, wherein a Tx window function (501) is applied individually to certain radar waveforms (r₁-r₈).

3. The radar transceiver (101) according to claim 1, wherein a Tx window function (301) is applied to a plurality of radar waveforms (108, r₁-r₈).

4. The radar transceiver (101) according to claim 3, wherein at least a first waveform (r₁) or a last waveform (r₈) in the plurality of radar waveforms (108, r₁-r₈) is omitted as a result of the applied Tx window function (301) having corresponding coefficients (c₁, c₈) that equal zero.

5. The radar transceiver (101) according to any one of the claims 3 or 4, wherein the receiver unit (104) comprises a digital signal processing, DSP, unit (122) and a receiver unit antenna arrangement (106), where the receiver unit (104) is adapted to receive radar signals (109) that have been reflected by an object (110) via the receiver unit antenna arrangement (106), where the receiver unit (104) is adapted to provide received digital intermediate frequency, IF, signals (123), that are fed into the DSP unit (122), where the DSP unit (122) is adapted to apply at least one Rx window function (118, 120; 401).

6. The radar transceiver (101) according to claim 5, wherein at least one Rx window function (118, 120; 401) constitutes a difference between a Tx window function (301) and a desired combined window function (403).

7. The radar transceiver (101) according to any one of the claims 5 or 6, wherein the DSP unit (122) is adapted to apply a first Rx window function (118) before applying a range Fast Fourier Transform, FFT, (119), and to apply a second Rx window function (120) before applying a Doppler FFT (121).

8. The radar transceiver (101) according to any one of the previous claims, wherein the radar waveforms (108) are constituted by Frequency Modulated Continuous Wave, FMCW, ramps (r₁-r₈), Stepped Frequency Continuous Wave, SFCW, ramps (601), or Orthogonal Frequency-Division Multiplexing, OFDM, symbols (701) .

9. A vehicle (100) comprising the radar transceiver (101) according to any previous claim.

10. A method in a radar transceiver (101), where the method comprises
generating and transmitting (S100) a plurality of subsequent radar waveforms (108) via a controllable amplifier arrangement (113) and a transmitter unit antenna arrangement (105) comprised in a transmitter unit (103); and
controlling (S200) the amplifier arrangement (113) to apply at least one Tx window function (301, 501) to a plurality of the generated radar waveforms (108, r₁-r₈) by controlling the amplifier arrangement (113) to reduce output power according to predetermined characteristics of the Tx window function (301, 501) .

11. The method according to claim 10, further comprising applying (S210) a Tx window function (501) individually to certain radar waveforms (r₁-r₈).

12. The method according to claim 10, further comprising applying (S220) a Tx window function (301) to a plurality of radar waveforms (108, r₁-r₈).

13. The method according to claim 12, further comprising omitting (S230) at least a first waveform (r₁) or a last waveform (r₈) in the plurality of radar waveforms (108, r₁-r₈) as a result of the applied Tx window function (301) having corresponding coefficients (c₁, c₈) that equal zero.

14. The method according to any one of the claims 12 or 13, further comprising applying at least one Rx window function (118, 120; 401) at a receiver unit comprised in the radar transceiver (101), where at least one Rx window function (118, 120; 401) constitutes a difference between a Tx window function (301) and a desired combined window function (403).

15. The method according to any one of the claims 10-14, wherein the radar waveforms (108) are constituted by Frequency Modulated Continuous Wave, FMCW, ramps (r₁-r₈), Stepped Frequency Continuous Wave, SFCW, ramps (601), or Orthogonal Frequency-Division Multiplexing, OFDM, symbols (701).
